# EUROPÄISCHE PATENTSCHRIFT

(11) **EP 1 346 896 B1**
(45) Veröffentlichungstag und Bekanntmachung des Hinweises auf die Patenterteilung: **30.11.2011**
(21) Anmeldenummer: 03003895.4
(22) Anmeldetag: 21.02.2003
(51) Int. Cl.: B60T 13/66, B60T 8/40, B60T 7/04, B60T 17/22

(54) **Elektrohydraulische Bremsvorrichtung für ein Kraftfahrzeug**
Electrohydraulic brake device for a vehicle
Dispositif de freinage electro-hydraulique pour un véhicule

(30) Priorität: 20.03.2002 DE 10212334
(43) Veröffentlichungstag der Anmeldung: 24.09.2003
(73) Patentinhaber: Volkswagen Aktiengesellschaft, 38436 Wolfsburg (DE)
(72) Erfinder: Schäfer, Peter, Dr., 71229 Leonberg (DE); Fuhrmann, Karl-Horst, 38110 Braunschweig (DE); Rischbieter, Frank, 38165 Lehre (DE); Heusinkveld, Jörg, 30175 Hannover (DE)

(56) Entgegenhaltungen:
- EP-A- 0 374 485
- EP-A2- 1 090 823
- EP-A2- 1 110 836
- DE-A- 19 951 939
- DE-C- 19 833 084
- US-A- 5 083 075
- US-A1- 2002 166 369

## Beschreibung

Die Erfindung bezieht sich auf ein Verfahren zum Betrieb einer elektrohydraulischen Bremsvorrichtung für ein Kraftfahrzeug nach dem Oberbegriff von Patentanspruch 1 sowie weiterhin auf eine elektrohydraulische Bremsvorrichtung für ein Kraftfahrzeug nach dem Oberbegriff von Patentanspruch 2.

Bei derartigen Bremsvorrichtungen wird die Bremskraft im Normalfall nicht mehr unmittelbar durch den Fahrer erzeugt. Vielmehr wird mittels geeigneter Sensoren die Stellung des Bremsbefehlgebers - in der Regel ein Bremspedal - erfaßt und an die Steuereinrichtung übertragen. In der Steuereinrichtung werden dann in Abhängigkeit der Stellung des Bremsbefehlgebers Stellsignale für die Ventilanordnung erzeugt, um den gewünschten Bremsdruck an die Radbremsen anzulegen. Die Bereitstellung des Bremsdrucks erfolgt über einen Hydraulikdruckspeicher, der jedenfalls während des Betriebs des Kraftfahrzeugs stets unter Druck gehalten wird.

Aus Sicherheitsgründen werden bei solchen elektrohydraulischen Bremsvorrichtungen zusätzliche Maßnahmen getroffen, die bei einem Ausfall der Stellungserfassung des Bremsbefehlgebers weiterhin eine Abbremsung des Fahrzeugs ermöglichen. Dieses Notsystem gewährleistet eine direkte Verbindung zwischen dem Bremsbefehlgeber und den Radbremsen. Üblicherweise wird ein solches Notsystem entsprechend einem herkömmlichen hydraulischen Bremssystem ausgebildet, das heißt ein Hauptbremszylinder vorgesehen, der bei einer Betätigung des Bremsbefehlgebers einen Bremsdruck bereitstellt. Eine zwischen dem Hauptbremszylinder und den Radbremsen vorgesehene Ventilanordnung wird dabei derart ausgestaltet, daß die unmittelbare Druckübertragung möglich ist.

Eine solche Bremsvorrichtung ist beispielsweise aus der DE 196 16 538 A1 bekannt. Deren Ventilanordnung schaltet bei einem Auftreten einer Störung automatisch auf das Notsystem um.

Die bekannte Bremsvorrichtung ist dahingehend nachteilig, daß nach einer Umschaltung auf das Notsystem durch den Fahrer erheblich größere Bremskräfte als im Normalbetrieb aufgebracht werden müssen. Dies ist für die Fahrsicherheit abträglich. Insbesondere besteht bei einem überraschenden Umschalten auf das Notsystem die Gefahr, daß der Fahrer anfänglich eine zu geringe Kraft auf den Bremsbefehlgeber bzw. das Bremspedal aufbringt, woraus ein unter Umständen zu langer Bremsweg resultiert.

Um hier Abhilfe zu schaffen, wird in der WO 00/68056 vorgeschlagen, bei Erkennung einer Störung die Funktionalität einer ebenfalls vorhandenen elektronischen Feststellbremse zur Unterstützung des Notsystems heranzuziehen. Jedoch versagt diese Unterstützung bei einem Totalausfall des elektrischen Bordnetzes des Fahrzeugs, da die zugehörige Steuerung von einer ausreichenden Stromversorgung abhängt.

Ein Verfahren der eingangs genannten Art sowie eine elektrohydraulische Bremsvorrichtung der eingangs genannten Art sind aus der EP 1 090 823 A2 bekannt.

Weitere elektrohydraulische Bremsvorrichtungen sind aus der EP 1 110 836 A2 bekannt.

Vor diesem Hintergrund liegt der Erfindung die Aufgabe zugrunde, bei einer elektrohydraulischen Bremsvorrichtung der eingangs genannten Art die Bremswirkung bei einem Bordnetzausfall zu verbessern.

Diese Aufgabe wird durch ein Verfahren gemäß Patentanspruch 1 sowie durch eine Bremsvorrichtung gemäß Patentanspruch 2 gelöst.

In einem brake-by-wire-System wird im deaktivierten Zustand der Ventilanordnung durch einen Bremsdruck eine Verbindung zu dem Hydraulikdruckspeicher zur Bremskraftverstärkung geöffnet. Bei einem Ausfall des Bordnetzes wird nach der erfindungsgemäßen Lösung der in dem Hydraulikdruckspeicher vorhandene Druck genutzt, um nach einer automatischen Umschaltung auf das Notsystem zumindest für einen gewissen Zeitraum die Bremswirkung zu verstärken, so daß der Fahrer bei einem Bremsvorgang nicht allein auf die von ihm ausgeübte Betätigungskraft angewiesen ist. Die Bremswirkung wird solange verstärkt, wie ein ausreichend hoher Druck in dem Hydraulikdruckspeicher vorhanden ist. Damit läßt sich bei Ausfall des Bordnetzes, was üblicherweise vom Fahrer erkannt wird, zumindest bei den nächsten Bremsungen ein Überraschungseffekt in bezug auf das Bremsverhalten des Fahrzeugs vermeiden. Vielmehr wird durch die Nutzung des Druckvorrats in dem Hydraulikdruckspeicher ein Zeitgewinn erreicht, innerhalb dessen der Fahrer sich auf die veränderten Umstände einstellen kann. Insbesondere wird gewährleistet, daß nach einem Erkennen des Ausfalls des Bordnetzes das Fahrzeug in gewohnter Art und Weise zum Stillstand gebracht werden kann.

In der Verbindung zu dem Hydraulikdruckspeicher ist ein selbsttätig schließendes Schaltventil angeordnet, das bei Anliegen eines Bremsdrucks öffnet. Durch die selbsttätige Schließfunktion wird ein versehentliches Öffnen im Normalbetriebszustand vermieden. Die Kopplung mit dem Bremsdruck stellt sicher, daß die Notfallunterstützung lediglich bei der Betätigung des Bremsbefehlgebers nach einem Umschalten auf das Notsystem aktiviert wird und unabhängig von dem Bordnetz des Fahrzeugs arbeitet.

Weiterhin kann in der Verbindung zu dem Hydraulikdruckspeicher ein Rückschlagventil angeordnet werden, das ein Rückströmen in Richtung des Hydraulikdruckspeichers verhindert. Dies ist insbesondere dann vorteilhaft, wenn der Druck des Hydraulikdruckspeichers unmittelbar an das Drucksystem der Radbremsen angelegt wird, also quasi unmittelbar der Unterstützung des Bremsdrucks selbst dient.

Das Schaltventil kann beispielsweise ein Druckregelventil sein, das den abgegebenen Druck des Hydraulikdruckspeichers auf ein vorgegebenes Niveau drosselt. Möglich ist auch die Ausbildung als Differenzdruckventil oder Rückschlagventil mit Vorsteuerung.

In einer weiteren, vorteilhaften Ausgestaltung der Erfindung wird der Druck des Hydraulikdruckspeichers beim Öffnen der Druckleitung zur Beaufschlagung des Hauptbremszylinders eingesetzt, um die fahrerseitig aufgebrachte Betätigungskraft zu erhöhen. Die Bremswirkung ist dann eine Folge aus der erhöhen Kraftbeaufschlagung des Hauptbremszylinders.

Wird dem Hauptbremszylinder ein Bremskraftverstärker vorgeschaltet, so kann in einer weiteren, bevorzugten Ausgestaltungsform die Druckleitung an den Bremskraftverstärker angeschlossen werden.

Nachfolgend wird die Erfindung nun anhand von zwei in der Zeichnung dargestellten Ausführungsbeispielen näher erläutert. Die Zeichnung zeigt in:
- Figur 1: ein Schaltbild für eine elektrohydraulische Bremsvorrichtung nach einem ersten Ausführungsbeispiel, und in
- Figur 2: ein Schaltbild für eine elektrohydraulische Bremsvorrichtung nach einem zweiten Ausführungsbeispiel.

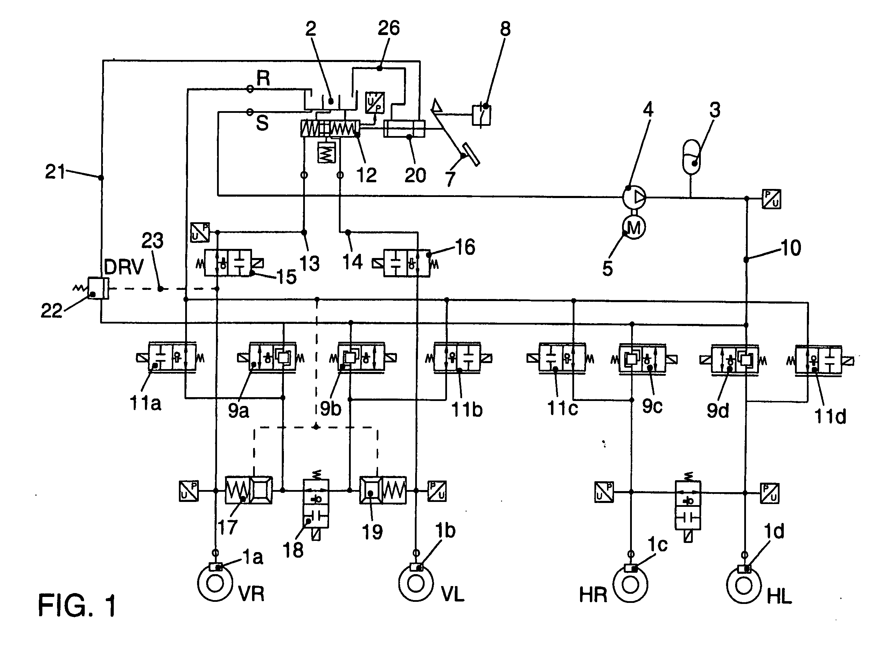

Die in Figur 1 dargestellte elektrohydraulische Bremsvorrichtung besitzt einen ersten Systemabschnitt, der im Normalbetrieb des Fahrzeugs aktiviert ist, sowie einen zweiten Systemabschnitt, der bei Ausfall des elektrischen Bordnetzes arbeitet und als Notsystem fungiert. In einem passiven, stromlosen Zustand fällt die elektrohydraulische Bremsvorrichtung automatisch in das Notsystem zurück.

Die elektrohydraulische Bremsvorrichtung weist den einzelnen Fahrzeugrädern zugeordnete Radbremsen 1a, 1b, 1c und 1d auf, die bei einer hydraulischen Druckbeaufschlagung ihre Bremswirkung entfalten. Dabei wirken die Radbremsen 1a und 1b auf die Vorderräder und die Radbremsen 1c und 1d auf die Hinterräder ein.

Die Radbremsen sind über eine schaltbare Ventilanordnung mit einer Druckquelle sowie weiterhin mit einem Reservoir 2 verbunden. Die Druckquelle wird hier durch einen Hydraulikdruckspeicher 3 sowie eine diesem vorgeschaltete Pumpe 4 gebildet, die durch einen Motor 5 angetrieben ist. Im Normalbetrieb wird der Hydraulikdruckspeicher 3 durch eine entsprechende Betätigung des Motors 5 und der Pumpe 4 unter Druck gehalten. Dazu wird Hydraulikfluid aus dem Reservoir 2 in den Hydraulikdruckspeicher 3 gepumpt. Die Druckquelle ist so ausgebildet, daß nach einem Abschalten des Fahrzeugs oder bei einem Ausfall des elektrischen Bordnetzes desselben der Druck in dem Hydraulikdruckspeicher 3 erhalten bleibt. Dies läßt sich beispielsweise durch geeignet angeordnete Rückschlagventile gewährleisten.

Für einen normalen Bremsvorgang wird unter Betätigung der Ventilanordnung Druck aus dem Hydraulikdruckspeicher 3 an die Radbremsen angelegt. Die Ansteuerung der Ventilanordnung erfolgt über eine in den Figuren lediglich angedeutete elektrische und/oder elektronische Steuereinrichtung 6 in Abhängigkeit der Stellung eines Bremsbefehlgebers 7, hier einem Bremspedal, über den der Fahrerwunsch für einen Bremsvorgang erfaßt wird. Zur Stellungserfassung sind an dem Bremsbefehlgeber 7 geeignete elektrische und/oder elektronische Sensoren 8 vorgesehen, die mit der Steuereinrichtung 6 verknüpft sind. Wird an dem Bremsbefehlgeber 7 ein Bremswunsch des Fahrers erfaßt, so wird über die Steuereinrichtung 6 und eine Betätigung der Ventilanordnung eine Versorgung der Radbremsen mit Bremsdruck aus dem Hydraulikdruckspeicher 3 veranlaßt.

Die Ventilanordnung weist hierzu für jede Radbremse 1a, 1b, 1c bzw. 1d ein erstes Schaltventil 9a, 9b, 9c bzw. 9d auf, das eine mit dem Hydraulikdruckspeicher 3 verbundene Druckleitung 10 gegenüber der jeweiligen Radbremse sowohl im Normalbetrieb als auch im Notbetrieb absperrt. Bei einem Bremsvorgang im Normalbetrieb werden diese Schaltventile 9a, 9b, 9c bzw. 9d von der Steuereinrichtung 6 gesteuert geöffnet, um den Bremsdruck an die Radbremsen anzulegen bzw. die Druckversorgung nach einem Bremsvorgang wieder zu unterbrechen. Zur Druckentlastung weist die Ventilanordnung für jede Radbremse 1a, 1b, 1c bzw. 1d weiterhin ein zweites Schaltventil 11a, 11b, 11c bzw. 11d auf, das zwischen den Radbremsen und dem Reservoir 2 eingekoppelt ist. Das zweite Schaltventil 11a, 11b, 11c bzw. 11d ist im Normalbetrieb wie auch im Notbetrieb offen, wird jedoch während eines Bremsvorgangs im Normalbetrieb durch die Steuereinrichtung 6 gesteuert geschlossen.

Die vorstehend erläuterten Komponenten sind für den Normalbetrieb der Bremsvorrichtung an einem Personenkraftfahrzeug ausreichend. Um in Fällen, in denen beispielsweise die Stellungserfassung an dem Bremsbefehlgeber 7 oder die Steuereinrichtung 6 versagt, dennoch eine Abbremsung des Fahrzeugs zu ermöglichen, ist an den Bremsbefehlgeber 7 ein Hauptbremszylinder 12 angeschlossen, wie er von hydraulischen Bremsvorrichtungen herkömmlicher Bauart bekannt ist. Dadurch wird eine von dem Fahrer auf den Bremsbefehlgeber 7 ausgeübte Kraft auf mechanischem und hydraulischem Wege an die Radbremsen übertragen. Die elektrohydraulische Bremsvorrichtung weist hierzu zwei Bremsdruckleitungen 13 und 14 auf, die über zwei Trennventile 15 und 16 der Ventilanordnung unmittelbar zu den Bremszylindern der Radbremsen 1a und 1b der Fahrzeugvorderräder führen. Diese beiden Trennventile 15 und 16, die mit der Steuereinrichtung 6 verknüpft sind, sind im stromlosen Zustand offen, so daß im Notbetrieb eine Druckversorgung der Radbremse gewährleistet ist. Im Normalbetrieb werden die Trennventile 15 und 16 normalerweise geschlossen.

In dem hier dargestellten Ausführungsbeispiel wirkt die Bremskraft im Normalbetrieb lediglich auf die Radbremsen 1a und 1b der Vorderräder ein. Zur Ermöglichung des Druckaufbaus bei einem Bremsvorgang sowie einer nachfolgenden Druckentlastung bei einem Loslassen des Bremsbefehlgebers 7 sind weitere Ventileinrichtungen 17, 18 und 19 vorgesehen, die dies in für den Fachmann bekannter Art und Weise ermöglichen.

Zur Verstärkung der Bremskraft im Notbetrieb wird bei der vorstehend erläuterten elektrohydraulischen Bremsvorrichtung der in dem Hydraulikdruckspeicher 3 vorhandene Druck genutzt. Dieser kann im Prinzip über geeignete Druckregelventile durch den von dem Hauptbremszylinder 12 erzeugten Bremsdruck gesteuert den Radbremsen 1a, 1b, 1c und 1d zugeschaltet werden.

Bei der Bremsvorrichtung nach dem ersten Ausführungsbeispiel wird der Druck des Hydraulikdruckspeichers 3 jedoch dazu verwendet, die Betätigungskraft des Fahrers bei einer Betätigung des Bremsbefehlgebers 7 zu erhöhen. Wie Figur 1 zeigt, ist zwischen dem Bremsbefehlgeber 7 und dem Hauptbremszylinder 12 ein Bremskraftverstärker 20 angeordnet. Die mit dem Hydraulikdruckspeicher 3 verbundene Druckleitung 10 ist über einen zusätzlichen Leitungsabschnitt 21 an den Bremskraftverstärker 20 angeschlossen, und zwar derart, daß der Druck der Druckleitung 10 die Verstärkung erhöht.

Der zusätzliche Leitungsabschnitt 21 ist im Normalbetrieb gegenüber dem Hydraulikdruckspeicher 3 über ein Schaltventil 22, hier ein Druckregelventil, abgesperrt. Das Schaltventil 22 nimmt selbsttätig seine Schließstellung ein und wird lediglich durch einen von dem Hauptbremszylinder 12 erzeugten Bremsdruck geöffnet. Seine Öffnungsfunktion ist daher von dem Zustand des elektrischen Bordnetzes des Fahrzeugs unabhängig.

Fällt das Bordnetz aus, so nimmt die elektrohydraulische Bremsvorrichtung den in Figur 1 dargestellte Schaltzustand ein, in dem der Hauptbremszylinder 12 über die Trennventile 15 und 16 mit den Radbremsen 1a und 1b hydraulisch verbunden ist. Das Schaltventil 22 befindet sich zu diesem Zeitpunkt immer noch in seiner Sperrstellung. Betätigt der Fahrer nun den Bremsbefehlgeber 7, wird über den Bremskraftverstärker 20 und den Hauptbremszylinder 12 ein Bremsdruck erzeugt und über die Ventilanordnung an die Radbremsen 1a und 1b angelegt. Dieser Bremsdruck liegt gleichzeitig auch über die Steuerdruckleitung 23 an dem Schaltventil 22 an, das infolgedessen öffnet und die Druckleitung 10 über den Leitungsabschnitt 21 mit dem Bremskraftverstärker 20 verbindet. Der in dem Hydraulikdruckspeicher 3 vorherrschende Druck wird so zur Verstärkung der Bremswirkung genutzt. Läßt der Fahrer den Bremsbefehlgeber 7 los, so wird der Bremsdruck an den Radbremsen 1a und 1b abgebaut. Gleichzeitig fällt das Schaltventil 22 selbsttätig in seinen Sperrzustand zurück.

Die Bremswirkung wird solange verstärkt, wie ein ausreichend hoher Druck in dem Hydraulikdruckspeicher 3 vorhanden ist. Mit dieser Vorgehensweise wird gewährleistet, daß nach einem Bordnetzausfall zumindest für die ersten Bremsungen ein dem normalen Bremsverhalten ähnliches Bremsverhalten des Fahrzeugs aufrechterhalten werden kann, um dieses sicher zum Stillstand zu bringen.

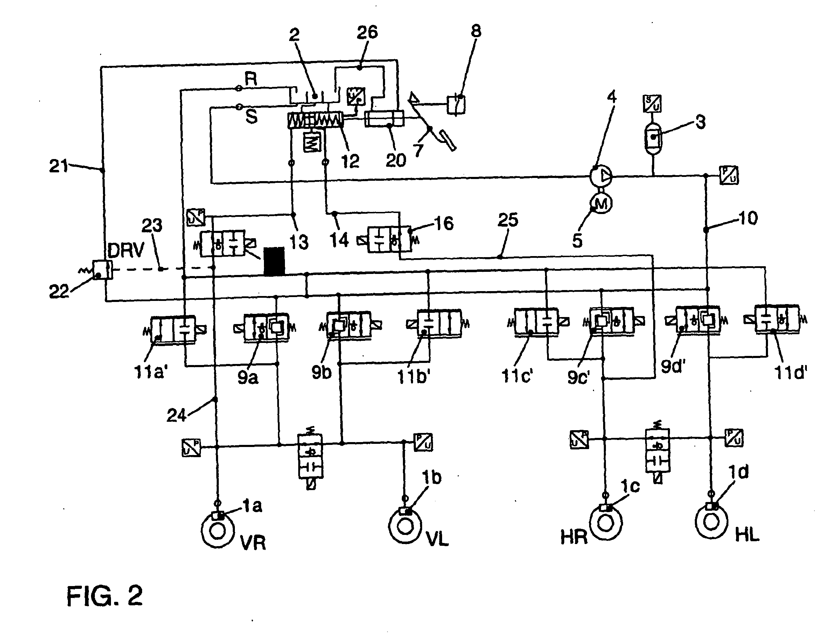

Das in Figur 2 dargestellte zweite Ausführungsbeispiel zeigt eine weitere Ausgestaltungsform einer elektrohydraulischen Bremsvorrichtung. Diese unterscheidet sich von derjenigen nach dem ersten Ausführungsbeispiel lediglich durch die Ventilanordnung, die nachfolgend in bezug auf die Unterschiede kurz näher erläutert werden soll. Für gleichartige Bauelemente werden in diesem Zusammenhang die Bezugszeichen des ersten Ausführungsbeispiels weiter verwendet.

Im Unterschied zu dem ersten Ausführungsbeispiel wird bei der Bremsvorrichtung nach dem zweiten Ausführungsbeispiel im Notbetrieb der Bremsdruck des Hauptbremszylinders 12 sowohl an die Radbremsen 1a und 1b der Vorderräder als auch an die Radbremsen 1c und 1d der Hinterräder angelegt. Entsprechend führen Leistungsabschnitte 24 und 25 von den Trennventilen 15 und 16 zu den vorderen und hinteren Radbremsen.

Ein weiterer Unterschied zu dem ersten Ausführungsbeispiel besteht in der Ruhestellung der zweiten Schaltventile 11a', 11b', 11c' und 11d', welche eine Entlastung des Bremsdrucks in das Reservoir 2 ermöglichen. Diese sind bei der elektrohydraulischen Bremsvorrichtung nach dem zweiten Ausführungsbeispiel im stromlosen Zustand geschlossen und werden durch die Steuereinrichtung 6 geöffnet. Wie in dem ersten Ausführungsbeispiel wird der zusätzliche Druck des Hydraulikdruckspeichers 3 nach einem unterstützten Bremsvorgang im Notbetrieb über eine Entlastungsleitung 26 in das Reservoir 2 entsorgt.

### BEZUGSZEICHENLISTE

- 1a, 1b, 1c, 1d: Radbremse
- 2: Reservoir
- 3: Hydraulikdruckspeicher
- 4: Pumpe
- 5: Motor
- 6: Steuereinrichtung
- 7: Bremsbefehlgeber (insbesondere Bremspedal)
- 8: Stellungssensor
- 9a, 9b, 9c, 9d: erstes Schaltventil
- 10: Druckleitung
- 11a, 11b, 11c,11d: zweites Schaltventil
- 11a', 11b', 11c',11d': zweites Schaltventil
- 12: Hauptbremszylinder
- 13: Bremsdruckleitung
- 14: Bremsdruckleitung
- 15: Trennventil
- 16: Trennventil
- 17: Plunger
- 18: Schaltventil
- 19: Plunger
- 20: Bremskraftverstärker
- 21: zusätzlicher Leitungsabschnitt der Druckleitung 10
- 22: Schaltventil (insbesondere Druckregelventil, Druckdifferenzventil oder vorgesteuertes Rückschlagventil)
- 23: Steuerdruckleitung
- 24: Bremsdruckleitung
- 25: Bremsdruckleitung
- 26: Entlastungsleitung

## Patentansprüche

1. Verfahren zum Betrieb einer elektrohydraulischen Bremsvorrichtung für ein Kraftfahrzeug, die umfasst:
- Radbremsen (1 a, 1b, 1c, 1 d) für die Fahrzeugräder,
- einen Bremsbefehlgeber (7) zur Betätigung durch den Fahrer des Fahrzeugs,
- einen Hydraulikdruckspeicher (3),
- eine schaltbare Ventilanordnung, die hydraulisch zwischen dem Hydraulikdruckspeicher (3) und den Radbremsen (1a, 1b, 1c, 1d) eingekoppelt ist,
- eine Steuereinrichtung (6), die in Abhängigkeit einer elektrisch und/oder elektronisch erfaßten Stellung des Bremsbefehlgebers (7) durch Betätigung der Ventilanordnung eine Versorgung der Radbremsen (1a, 1 b, 1c, 1d) mit Bremsdruck veranlaßt,
- einen Hauptbremszylinder (12), der durch den Bremsbefehlgeber (7) betätigbar und über die Ventilanordnung mit den Radbremsen (1a, 1b, 1c, 1d) hydraulisch gekoppelt ist,
wobei im Normalbetrieb unter Betätigung der Ventilanordnung Druck aus dem Hydraulikdruckspeicher (3) an die Radbremsen (1a, 1b, 1c, 1d) angelegt wird und die Verbindung zwischen dem Hauptbremszylinder (12) und den Radbremsen durch Trennventile (15, 16) unterbrochen ist, und
in einem stromlosen Zustand bei Ausfall der Steuereinrichtung (6) auf einen Notbetrieb übergegangen wird, in dem der Hauptbremszylinder (12) mit den Radbremsen durch Öffnen der Trennventile (15, 16) verbunden wird und der in dem Hydraulikspeicher (3) vorhandene Druck bremsdruckverstärkend zugeschaltet wird,
**dadurch gekennzeichnet, dass**
die bremsdruckverstärkende Zuschaltung des Drucks des Hydraulikspeichers (3) durch Betätigung eines selbsttätig schließenden Schaltventils (22) erfolgt, das durch Anlegen eines Bremsdrucks von Hauptbremszylinder (12) geöffnet wird.

2. Elektrohydraulische Bremsvorrichtung für ein Kraftfahrzeug, umfassend:
- Radbremsen (1a, 1b, 1c, 1d) für die Fahrzeugräder,
- einen Bremsbefehlgeber (7) zur Betätigung durch den Fahrer des Fahrzeugs,
- einen Hydraulikdruckspeicher (3),
- eine schaltbare Ventilanordnung, die hydraulisch zwischen dem Hydraulikdruckspeicher (3) und den Radbremsen (1a, 1b, 1c, 1d) eingekoppelt ist,
- eine Steuereinrichtung (6), die im Normalbetrieb der Bremsvorrichtung in Abhängigkeit einer elektrisch und/oder elektronisch erfaßten Stellung des Bremsbefehlgebers (7) durch Betätigung der Ventilanordnung eine Versorgung der Radbremsen (1a, 1b, 1c, 1d) mit Bremsdruck aus dem Hydraulikdruckspeicher (3) veranlaßt,
- einen Hauptbremszylinder (12), der durch den Bremsbefehlgeber (7) betätigbar und über die Ventilanordnung mit den Radbremsen (1a, 1b, 1c, 1d) derart hydraulisch gekoppelt ist, dass eine hydraulische Verbindung über Trennventile (15, 16) der Ventilanordnung zwischen dem Hauptbremszylinder (12) und den Radbremsen (1a, 1b, 1c, 1 d) in einem stromlosen Zustand der Trennventile geöffnet ist, um während eines Notbetriebs bei Ausfall der Steuereinrichtung (6) einen Bremsdruck von dem Hauptzylinder (12) an die Radbremsen (1a, 1b, 1c, 1d) zu übertragen, im Normalbetrieb hingegen geschlossen ist,
- einen Leitungsabschnitt (21) zur Bremskraftverstärkung, und
- ein Schaltventil (22), das den Leitungsabschnitt (21) zur Bremskraftverstärkung gegenüber dem Hydraulikdruckspeicher (3) im Normalbetrieb absperrt, im Notbetrieb hingegen mit dem Hydraulikdruckspeicher (3) derart verbindet, um einen fahrerseitig erzeugten Bremsdruck zu verstärken,
**dadurch gekennzeichnet, dass**
das Schaltventil (22) ein selbsttätig schließendes Schaltventil (22) ist, das bei Anliegen eines Bremsdrucks vom Hauptbremszylinder (12) öffnet.

3. Elektrohydraulische Bremsvorrichtung nach Anspruch 2, **dadurch gekennzeichnet, dass** in der Verbindung zwischen dem Leitungsabschnitt (21) zur Bremskraftverstärkung und dem Hydraulikdruckspeicher (3) ein Rückschlagventil angeordnet ist, das ein Rückströmen in Richtung des Hydraulikdruckspeichers (3) verhindert.

4. Elektrohydraulische Bremsvorrichtung nach Anspruch 2 oder 3, **dadurch gekennzeichnet, dass** das Schaltventil (22) ein Druckregelventil ist, das den abgegebenen Druck des Hydraulikdruckspeichers (3) auf ein vorgegebenes Niveau drosselt.

5. Elektrohydraulische Bremsvorrichtung nach Anspruch 2 oder 3, **dadurch gekennzeichnet, dass** das Schaltventil (22) ein Differenzdruckventil ist.

6. Elektrohydraulische Bremsvorrichtung nach Anspruch 2 oder 3, **dadurch gekennzeichnet, dass** das Schaltventil (22) ein Rückschlagventil mit Vorsteuerung ist.

7. Elektrohydraulische Bremsvorrichtung nach einem der Ansprüche 2 bis 6, **dadurch gekennzeichnet, dass** der Leitungsabschnitt (21) zur Bremskraftverstärkung an den Hauptbremszylinder (12) angeschlossen ist, so dass beim Öffnen der als Druckleitung (10) ausgebildeten Verbindung zu dem Hydraulikdruckspeicher (3) der Druck des Hydraulikdruckspeichers (3) zur Beaufschlagung des Hauptbremszylinders (12) eingesetzt wird, um die fahrerseitig aufgebrachte Betätigungskraft zu erhöhen.

8. Elektrohydraulische Bremsvorrichtung nach einem der Ansprüche 2 bis 6, **dadurch gekennzeichnet, dass** dem Hauptbremszylinder (12) ein Bremskraftverstärker (20) vorgeschaltet ist und der Leitungsabschnitt (21) zur Bremskraftverstärkung an den Bremskraftverstärker (20) angeschlossen ist, um die fahrerseitig aufgebrachte Betätigungskraft zu erhöhen.

## Claims

1. Method for operating an electrohydraulic brake device for a motor vehicle, which brake device comprises:
- wheel brakes (1a, 1b, 1c, 1d) for the vehicle wheels,
- a brake command transmitter (7) for the actuation by the driver of the vehicle,
- a hydraulic pressure accumulator (3),
- a switchable valve arrangement which is coupled hydraulically between the hydraulic pressure accumulator (3) and the wheel brakes (1a, 1b, 1c, 1d),
- a control device (6) which causes a supply of the wheel brakes (1a, 1b, 1c, 1d) with brake pressure by actuation of the valve arrangement as a function of an electrically and/or electronically detected position of the brake command transmitter (7),
- a brake master cylinder (12) which.can be actuated by the brake command transmitter (7) and is coupled hydraulically to the wheel brakes (1a, 1b, 1c, 1d) via the valve arrangement,
pressure being applied from the hydraulic pressure accumulator (3) to the wheel brakes (1a, 1b, 1c, 1d) in normal operation with actuation of the valve arrangement, and the connection between the brake master cylinder (12) and the wheel brakes being interrupted by separating valves (15, 16), and
a transition being made in a currentless state in the event of a failure of the control device (6) to an emergency mode, in which the brake master cylinder (12) is connected to the wheel brakes by opening of the separating valves (15, 16) and the pressure which is present in the hydraulic accumulator (3) is connected in a manner which boosts brake pressure,
**characterized in that**
the connection of the pressure of the hydraulic accumulator (3) in a manner which boosts brake pressure takes place by actuation of an automatically closing control valve (22) which is opened by application of a brake pressure by the brake master cylinder (12).

2. Electrohydraulic brake device for a motor vehicle, comprising:
- wheel brakes (1a, 1b, 1c, 1d) for the vehicle wheels,
- a brake command transmitter (7) for the actuation by the driver of the vehicle,
- a hydraulic pressure accumulator (3),
- a switchable valve arrangement which is coupled hydraulically between the hydraulic pressure accumulator (3) and the wheel brakes (1a, 1b, 1c, 1d),
- a control device (6) which causes a supply of the wheel brakes (1a, 1b, 1c, 1d) with brake pressure from the hydraulic pressure accumulator (3) by actuation of the valve arrangement as a function of an electrically and/or electronically detected position of the brake command transmitter (7) during normal operation,
- a brake master cylinder (12) which can be actuated by the brake command transmitter (7) and is coupled hydraulically to the wheel brakes (1a, 1b, 1c, 1d) via the valve arrangement in such a way that a hydraulic connection is opened via separating valves (15, 16) of the valve arrangement between the brake master cylinder (12) and the wheel brakes (1a, 1b, 1c, 1d) in a currentless state of the separating valves, in order to transmit a brake pressure from the master cylinder (12) to the wheel brakes (1a, 1b, 1c, 1d) during an emergency mode in the event of a failure of the control device (6), and in contrast is closed during normal operation,
- a line section (21) for boosting the braking force, and
- a control valve (22) which shuts off the line section (21) for boosting the braking force with respect to the hydraulic pressure accumulator (3) during normal operation, but in contrast connects it to the hydraulic pressure accumulator (3) during emergency operation, in order to boost a brake pressure which is generated on the driver side,
**characterized in that**
the control valve (22) is an automatically closing control valve (22) which opens if a brake pressure is applied by the brake master cylinder (12).

3. Electrohydraulic brake device according to Claim 2, **characterized in that** a non-return valve which prevents a return flow in the direction of the hydraulic pressure accumulator (3) is arranged in the connection between the line section (21) for boosting the braking force and the hydraulic pressure accumulator (3).

4. Electrohydraulic brake device according to Claim 2 or 3, **characterized in that** the control valve (22) is a pressure control valve which throttles the output pressure of the hydraulic pressure accumulator (3) to a predefined level.

5. Electrohydraulic brake device according to Claim 2 or 3, **characterized in that** the control valve (22) is a differential-pressure regulating valve.

6. Electrohydraulic brake device according to Claim 2 or 3, **characterized in that** the control valve (22) is a non-return valve with feed forward control.

7. Electrohydraulic brake device according to one of Claims 2 to 6, **characterized in that** the line section (21) for boosting the braking force is connected to the brake master cylinder (12), with the result that, during the opening of the connection to the hydraulic pressure accumulator (3), which connection is configured as a pressure line (10), the pressure of the hydraulic pressure accumulator (3) is used to load the brake master cylinder (12), in order to increase the actuating force which is applied on the driver side.

8. Electrohydraulic brake device according to one of Claims 2 to 6, **characterized in that** a braking force booster (20) is connected in front of the brake master cylinder (12) and the line section (21) for boosting the braking force is connected to the braking force booster (20), in order to increase the actuating force which is applied on the driver side.

## Revendications

1. Procédé d'exploitation d'un dispositif de freinage électrohydraulique pour un véhicule automobile, lequel comprend :
- des freins de roue (1a, 1b, 1c, 1d) pour les roues du véhicule,
- un codeur d'instruction de freinage (7) à actionner par le conducteur du véhicule,
- un accumulateur de pression hydraulique (3),
- un arrangement de vannes commutable qui est inclus par connexion hydraulique entre l'accumulateur de pression hydraulique (3) et les freins de roue (1a, 1b, 1c, 1d),
- un dispositif de commande (6) qui, en fonction d'une position détectée électriquement et/ou électroniquement du codeur d'instruction de freinage (7), provoque un approvisionnement des freins de roue (1a, 1b, 1c, 1d) en pression de freinage en actionnant l'arrangement de vannes,
- un maître-cylindre de frein (12) qui peut être actionné par le codeur d'instruction de freinage (7) et qui est connecté hydrauliquement aux freins de roue (1a, 1b, 1c, 1d) par le biais de l'arrangement de vannes,
procédé selon lequel, en fonctionnement normal, en actionnant l'arrangement de vannes, la pression issue de l'accumulateur de pression hydraulique (3) est appliquée aux freins de roue (1a, 1b, 1c, 1d) et la liaison entre le maître-cylindre de frein (12) et les freins de roue est interrompue par des vannes de coupure (15, 16), et
en l'absence d'alimentation électrique en cas de panne du dispositif de commande (6), une transition vers un fonctionnement de secours est effectuée, dans lequel le maître-cylindre de frein (12) est relié avec les freins de roue par l'ouverture des vannes de coupure (15, 16) et la pression présente dans l'accumulateur de pression hydraulique (3) est appliquée en complément en assistance à la pression de freinage,
**caractérisé en ce que**
le complément d'assistance à la pression de freinage par la pression de l'accumulateur de pression hydraulique (3) est réalisé en actionnant une vanne de commutation (22) à fermeture automatique qui est ouverte par le maître-cylindre de frein (12) en appliquant une pression de freinage.

2. Dispositif de freinage électrohydraulique pour un véhicule automobile, comprenant :
- des freins de roue (1a, 1b, 1c, 1d) pour les roues du véhicule,
- un codeur d'instruction de freinage (7) à actionner par le conducteur du véhicule,
- un accumulateur de pression hydraulique (3),
- un arrangement de vannes commutable qui est inclus par connexion hydraulique entre l'accumulateur de pression hydraulique (3) et les freins de roue (1a, 1b, 1c, 1d) ,
- un dispositif de commande (6) qui, en fonctionnement normal du dispositif de freinage, en fonction d'une position détectée électriquement et/ou électroniquement du codeur d'instruction de freinage (7), provoque un approvisionnement des freins de roue (1a, 1b, 1c, 1d) en pression de freinage depuis l'accumulateur de pression hydraulique (3) en actionnant l'arrangement de vannes,
- un maître-cylindre de frein (12) qui peut être actionné par le codeur d'instruction de freinage (7) et qui est connecté hydrauliquement aux freins de roue (1a, 1b, 1c, 1d) par le biais de l'arrangement de vannes de telle sorte qu'une liaison hydraulique entre le maître-cylindre de frein (12) et les freins de roue (1a, 1b, 1c, 1d) est ouverte par le biais de vannes de coupure (15, 16) de l'arrangement de vannes lorsque les vannes de coupure sont hors tension afin de transmettre, pendant un fonctionnement de secours en cas de panne du dispositif de commande (6), une pression de freinage du maître-cylindre de frein (12) vers les freins de roue (1a, 1b, 1c, 1d), celle-ci étant par contre fermée en fonctionnement normal,
- une portion de conduite (21) pour amplifier la force de freinage et
- une vanne de commutation (22) qui isole la portion de conduite (21) pour amplifier la force de freinage par rapport à l'accumulateur de pression hydraulique (3) en fonctionnement normal, alors qu'en fonctionnement de secours, par contre, elle la relie avec l'accumulateur de pression hydraulique (3) de manière à amplifier une pression de freinage produite par le conducteur,
**caractérisé en ce que**
la vanne de commutation (22) est une vanne de commutation (22) à fermeture automatique qui s'ouvre lors de l'application d'une pression de freinage par le maître-cylindre de frein (12).

3. Dispositif de freinage électrohydraulique selon la revendication 2, **caractérisé en ce qu'**un clapet anti-retour est disposé dans la liaison entre la portion de conduite (21) pour amplifier la force de freinage et l'accumulateur de pression hydraulique (3), lequel empêche un reflux en direction de l'accumulateur de pression hydraulique (3).

4. Dispositif de freinage électrohydraulique selon la revendication 2 ou 3, **caractérisé en ce que** la vanne de commutation (22) est un régulateur de pression qui restreint la pression délivrée par l'accumulateur de pression hydraulique (3) à un niveau prédéfini.

5. Dispositif de freinage électrohydraulique selon la revendication 2 ou 3, **caractérisé en ce que** la vanne de commutation (22) est une vanne à pression différentielle.

6. Dispositif de freinage électrohydraulique selon la revendication 2 ou 3, **caractérisé en ce que** la vanne de commutation (22) est un clapet anti-retour avec commande pilote.

7. Dispositif de freinage électrohydraulique selon l'une des revendications 2 à 6, **caractérisé en ce que** la portion de conduite (21) pour amplifier la force de freinage est raccordée au maître-cylindre de frein (12), de sorte que lors de l'ouverture de la liaison vers l'accumulateur de pression hydraulique (3), laquelle est réalisée sous la forme d'une conduite pressurisée (10), la pression de l'accumulateur de pression hydraulique (3) est utilisée pour solliciter le maître-cylindre de frein (12) afin d'augmenter la force d'actionnement appliquée par le conducteur.

8. Dispositif de freinage électrohydraulique selon l'une des revendications 2 à 6, **caractérisé en ce qu'**un servofrein (20) est branché en amont du maître-cylindre de frein (12) et la portion de conduite (21) pour amplifier la force de freinage est raccordée au servofrein (20) afin d'augmenter la force d'actionnement appliquée par le conducteur.
